# EUROPÄISCHE PATENTSCHRIFT

(11) **EP 2 514 075 B1**
(45) Veröffentlichungstag und Bekanntmachung des Hinweises auf die Patenterteilung: **31.05.2017**
(21) Anmeldenummer: 10798753.9
(22) Anmeldetag: 15.12.2010
(51) Int. Cl.: H02K 5/10, H02K 5/15

(54) **MOTORHALTER ZUR AUFNAHME EINER ELEKTRISCHEN MASCHINE UND ELEKTRISCHE MASCHINE**
RETAINER FOR AN ELECTRIC MACHINE AND ELECTRIC MACHINE
CROCHET POUR MACHINE ÉLECTRIQUE ET MACHINE ÉLECTRIQUE

(30) Priorität: 18.12.2009 DE 102009055013
(43) Veröffentlichungstag der Anmeldung: 24.10.2012
(73) Patentinhaber: Brose Fahrzeugteile GmbH & Co. Kommanditgesellschaft, Würzburg, 97076 Würzburg (DE)
(72) Erfinder: STÖHLING, Marco, 97795 Schondra (DE); DILLER, Hannelore, 97228 Rottendorf (DE); RÖCHNER, Burkard, 97076 Würzburg (DE)
(74) Vertreter: Isarpatent
(86) Internationale Anmeldenummer: PCT/EP2010/069725
(87) Internationale Veröffentlichungsnummer: WO 2011/073242

(56) Entgegenhaltungen:
- DE-A1- 3 305 297
- DE-A1- 19 521 394
- JP-A- 2000 110 791

## Beschreibung

Die Erfindung betrifft einen Motorhalter zur Aufnahme einer elektrischen Maschine und eine elektrische Maschine mit einem solchen Motorhalter.

Derartige Motorhalter für elektrische Maschinen, wie zum Beispiel Motoren und/oder Generatoren, werden zum Beispiel zur Halterung von Motoren in verschiedenen motorbetriebenen Aggregaten in Kraftfahrzeugen, wie beispielsweise Klimaanlagen, verwendet. Da sich diese Antriebe häufig in einem Bereich des Kraftfahrzeugs befinden, der äußeren Umgebungsbedingungen, wie beispielsweise hohe Temperaturunterschiede, hohe Feuchtigkeit, Kondensat oder Kondenswasser, Spritzwasser, Staub, Salz und dergleichen ausgesetzt ist, werden diese elektrischen Maschinen durch den Motorhalter nicht nur gehalten, sondern auch vor Nässe und Staub geschützt.

Die DE 195 21 394 A1 beschreibt ein Motorgehäuse, dass aus einem zylinderförmigen Mantelgehäuseteil besteht, dessen beide Stirnseiten durch je ein topfförmig ausgebildetes Lagerschild feuchtigkeitsdicht verschlossen sind.

Die DE 33 05 297 A1 beschreibt ein haubenförmiges Lagerschild, welches in einem außenseitigen verdickten Seitenwandabschnitt eine Ablaufbohrung aufweist, die in die Innenseite mündet und von einer Sperrfläche überdeckt ist.

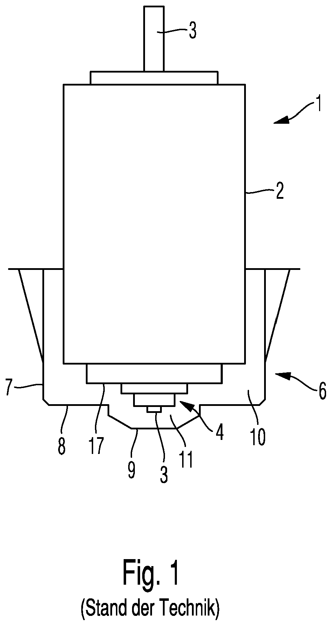

Fig. 1 zeigt eine allgemein bekannte elektrische Maschine 1 in einer Ausführung als Motor mit einem Gehäuse 2, in welchem eine Ankerwelle 3 drehbar gelagert ist. Ein Lager 4 im hinteren Bereich des Motors, der hier als hinteres Ende bezeichnet wird, ist in Fig. 1 lediglich angedeutet. Der Motor steht in dieser Einbaulage senkrecht, wobei sein Abtrieb, hier durch ein herausragendes Ende der Ankerwelle 3 angedeutet oben liegt. Das Lager 4 am hinteren Ende ist als Lagerbügel mit einer Aufnahme für einen Lagerkörper, z.B. ein Kalottenlager, ausgebildet.

Ein Motorhalter 6 mit einer umlaufenden Außenwand 7, einem Zwischenboden 8 und einem Boden 9 ist um das hintere Ende der elektrischen Maschine zur (nicht näher erläuterten) Halterung des Motors und zum Schutz des Lagers 4 an dem Gehäuse 2 der elektrischen Maschine 1 angebracht und umgibt den unteren Bereich des Motors. Unterhalb des Lagers 4 ist der Zwischenboden 8 nach unten durch einen Lagerbereich 11 erweitert, der vom Boden 9 nach unten begrenzt ist. Der Boden 9 schützt das Lager 4 vor äußeren Einflüssen. In dem Lagerbereich 11 kann sich aber zum Beispiel durch große Temperaturunterschiede hervorgerufenes Tauwasser, Kondensat oder Kondenswasser, Spritzwasser, Staub und dergleichen ansammeln. Diese Elemente können dann zwischen die Außenwand 7 des Motorhalters 6 und der Außenfläche des Gehäuses 2 in den Innenraum 10 des Motorhalters 6 eindringen. Dadurch können sowohl das Lager 4 mit seinem Lagerkörper und das Wellenende der Ankerwelle 3 in Kontakt mit diesen Elementen kommen und im Falle von Feuchtigkeit und Nässe zum Beispiel rosten. Dies gilt es zu vermeiden, da das Lager 4 durch Rost, Schmutz und gefrorene Feuchtigkeit schwergängig werden und eventuell blockieren kann. Damit wäre die Funktion des von der elektrischen Maschine angetriebenen Aggregats beeinträchtigt.

Vor diesem Hintergrund liegt der vorliegenden Erfindung die Aufgabe zugrunde, einen verbesserten Motorhalter bereitzustellen.

Erfindungsgemäß wird diese Aufgabe durch einen Motorhalter mit den Merkmalen des Patentanspruchs 1 und/oder durch eine elektrische Maschine mit den Merkmalen des Patentanspruchs 6 gelöst.

### Demgemäß ist vorgesehen:

Ein Motorhalter zur Aufnahme einer elektrischen Maschine, insbesondere zur Aufnahme des Lagers einer elektrischen Maschine, mit einer umlaufenden Außenwand, mit einem mit der umlaufenden Außenwand verbundenen Zwischenboden, mit einem Boden zur Aufnahme eines Lagers, welcher in dem Zwischenboden eingeformt ist und mit dem Zwischenboden durch einen Übergangsbereich verbunden ist, wobei der Übergangsbereich eine umlaufende erste Ringwand und zumindest eine umlaufende zweite Ringwand aufweist, die einen im Übergangsbereich vorgesehenen, kreisringförmigen Speicherraum bilden, wobei die erste und die zumindest eine zweite Ringwand mit einem Lagerbügel einer dem Motorhalter zuzuordnenden elektrischen Maschine eine Labyrinth-artige Dichtung ausbilden. Eine Elektrische Maschine, mit einem Gehäuse, welches ein Ende mit einem Lagerbügel, der ein nach außen zumindest teilweise offenes Lager aufweist, enthält, mit einem erfindungsgemäßen Motorhalter, wobei der Motorhalter über dem Ende des Gehäuses mit dem Lagerbügel angeordnet ist und wobei das Lager im Lagerbereich des Motorhalters angeordnet ist.

Die der vorliegenden Erfindung zugrunde liegende Idee besteht darin, im Motorhalter eine erste und zumindest eine zweite Ringwand anzuordnen, wodurch vor dem Bereich, der zur Aufnahme des Lagers dient, eine Kammer oder ein Speicherraum gebildet ist, in dem sich zum Beispiel Wasser, Schmutz, Flugschnee und dergleichen sammeln kann und damit nicht in Kontakt mit dem Lager kommen kann. Diese Kammer bzw. der Speicherraum ist in radialer Richtung geschlossen. Dadurch wird verhindert, dass Wasser, Staub und dergleichen von außen nach innen insbesondere in den Bereich des Motorhalters, der für das Lager vorgesehen ist, gelangen kann.

Ein besonderer Vorteil besteht somit auch darin, dass ein Festfrieren und/oder Rosten eines Lagersystems eines zuzuordnenden Motors bzw. einer elektrischen Maschine dadurch auf einfache Weise vermieden wird.

Vorteilhafte Ausgestaltungen und Weiterbildungen der Erfindung ergeben sich aus den Unteransprüchen sowie aus der Beschreibung in Zusammenschau mit den Figuren der Zeichnung. Dabei ist es vorteilhaft, dass die erste und die zumindest eine zweite Ringwand jeweils eine in etwa gleiche Höhe aufweisen. Dadurch wird eine Art Labyrinthdichtung geschaffen, die an unterschiedliche Konstruktionen von Lagern bzw. Lagerbügeln ohne zusätzliche Änderungen anbringbar ist.

Dabei legen die zumindest eine erste Ringwand und ein ihr zugeordneter Abschnitt der Außenwand einen weiteren Speicherraum fest, in welchem sich Wasser, Tauwasser, Flugschnee und Schmutz bzw. auch Staub sammeln kann, ohne in den Lagerbereich vorzudringen.

In einer besonders vorteilhaften Ausgestaltung ist der Übergangsbereich im Übergang zu dem Zwischenboden mit zumindest einer umlaufenden ersten Ringwand und im Übergang zu dem Boden mit zumindest einer umlaufenden zweiten Ringwand begrenzt.

Wenn die erste und zumindest eine zweite Ringwand mit dem Übergangsbereich einen Sekundärspeicherraum festlegen, kann dieser vorteilhaft als ein weiterer Sammelraum für aus den äußeren Bereichen überfließendes Wasser dienen. Dabei wird der Lagerbereich noch effektiver vor Nässe und Schmutz freigehalten bzw. geschützt.

Die zumindest eine zweite Ringwand kann mit dem Boden einen Lagerbereich festlegen, in dem das zu schützende Lager der elektrischen Maschine angeordnet ist oder angeordnet werden kann. Dadurch wird eine sehr kompakte Bauform erreicht.

Die erste und die zumindest eine zweite Ringwand erstrecken sich im Wesentlichen in Richtung der Längsachse der elektrischen Maschine in einem etwa gleichen Maß. Dadurch ist es möglich, z.B. bei einem etwa gleichen Maß der Ringwand eine Vielzahl von unterschiedlichen Motortypen und -klassen mit demselben Motorhalter abzudecken und zu schützen. , ohne dass für diese unterschiedliche Motortypen und -klassen jeweils unterschiedliche Motorhalter bereit gestellt werden müssten. Dies ist ein besonderer Vorteil, da man dadurch für die zum Beispiel auch hinsichtlich ihrer Größe unterschiedlichen Motortypen und -klassen jeweils dieselben Motorhalter verwenden kann und nicht eine entsprechende Vielzahl unterschiedlicher Motorhalter vorhalten muss. Die Motorhalter lassen sich dadurch mit größeren Stückzahlen herstellen, was diese insgesamt sogar kostengünstiger macht.

Die elektrische Maschine kann Bestandteil einer Klimaanlage eines Kraftfahrzeugs sein. Die Anwendung in Klimaanlagen ist besonders vorteilhaft, da sich dort Feuchtigkeit durch die in der Klimaanlage vorhandenen Temperaturunterschiede besonders einfach bilden kann. Allerdings wären auch andere Anwendungen denkbar und vorteilhaft.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Seitenansicht eines allgemein bekannten Motorhalters einer elektrischen Maschinen;
- Fig. 2: eine schematische Schnittansicht des unteren Abschnitts eines ersten Ausführungsbeispiels einer elektrischen Maschine und eines erfindungsgemäßen Motorhalters;
- Fig. 3: eine schematische Schnittansicht des unteren Abschnitts eines zweiten Ausführungsbeispiels einer elektrischen Maschine und des erfindungsgemäßen Motorhalters nach Fig. 2;
- Fig. 4: eine Innenansicht eines ersten Ausführungsbeispiels des erfindungsgemäßen Motorhalters;
- Fig. 5: eine Schnittansicht gemäß Schnittlinie A-A nach Fig. 4;
- Fig. 6: eine vergrößerte Teilinnenansicht des unteren Abschnitts nach Fig. 5; und
- Fig. 7: eine vergrößerte Teilinnenansicht eines unteren Abschnitts eines zweiten Ausführungsbeispiels des erfindungsgemäßen Motorhalters.

In den Figuren der Zeichnung sind gleiche und funktionsgleiche Elemente und Merkmale - sofern nichts Anderes ausgeführt ist - mit denselben Bezugszeichen versehen.

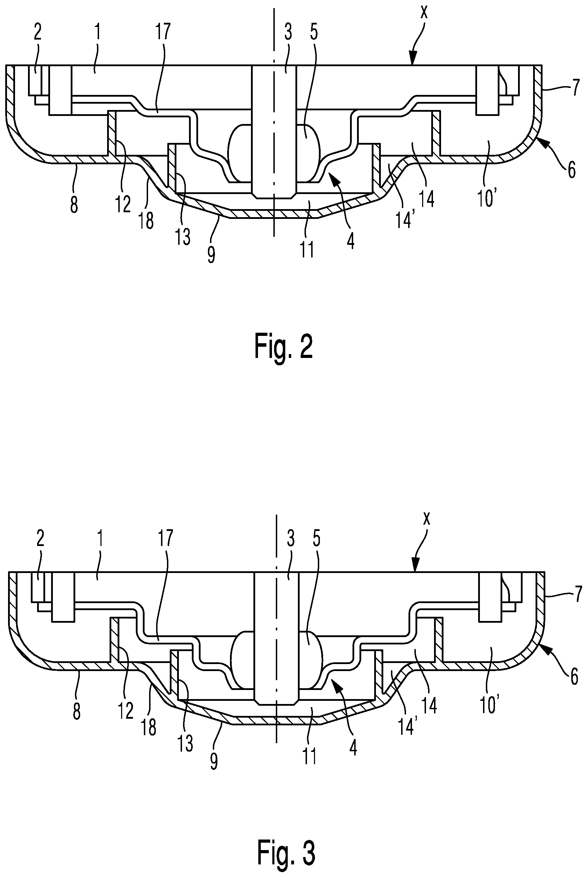

Fig. 2 zeigt eine schematische Schnittansicht des unteren Abschnitts eines ersten Ausführungsbeispiels einer elektrischen Maschine und eines erfindungsgemäßen Motorhalters, und Fig. 3 ein zweites Ausführungsbeispiel einer elektrischen Maschine. Die Ausführungsbeispiele unterscheiden sich nur in der Gestaltung des Lagerbügels 17, so dass die Beschreibung der Fig. 2 auch für Fig. 3 gilt.

Der Lagerbügel 17 ist zum Beispiel aus einem Stahlblech geformt und weist zentral eine Formung für das Lager 4 auf, welches hier ein Kalottenlager mit einem Lagerkörper 5 (Gleitlager) ist, in dem das untere Wellenende der Ankerwelle 3 gelagert ist. Der Motorhalter 7 ist mit seinem hier gezeigten unteren Bereich an die Außenkontur des Lagerbügels 17 angepasst. An einem Übergang vom Zwischenboden 8 zum Boden 9 ist vor einem abgerundeten Übergangsabschnitt 18 eine umlaufende erste Ringwand 12 angeordnet, die einen Speicherraum 10' des Innenraums 10 des Motorhalters 6 festlegt. Die erste Ringwand 12 erstreckt sich in Richtung der Längsachse der elektrischen Maschine 1 bis kurz vor die Außenfläche des Lagerbügels 17, wobei nur ein kleiner Abstand vorhanden ist.

Am Ende des Übergangsabschnitts 18 von dem Zwischenboden 8 zum Boden 9 an einem Übergang zum Boden 9 ist eine umlaufende zweite Ringwand 13 angeordnet, welche sich wie die erste Ringwand 12 in Richtung der Längsachse der elektrischen Maschine 1 erstreckt. In dieser in Fig. 2 gezeigten Ausführung der elektrischen Maschine 1 ist hier ein größerer Abstand zwischen dem oberen Rand der zweiten Ringwand 13 und dem Lagerbügel 17 vorhanden. In dem zweiten Ausführungsbeispiel des Motors nach Fig. 3 ist dieser Abstand genauso groß wie der Abstand der ersten Ringwand 12 zum Lagerbügel 17.

In dem Bereich des Übergangsabschnitts 18 zwischen der ersten Ringwand 12 und der zweiten Ringwand 13 wird durch diese beiden und dem Übergangsabschnitt 18 ein Sekundärspeicherraum 14 festgelegt. In diesem bildet eine abgerundete Kante im Übergang zum Boden 9 mit der zweiten Ringwand 13 einen umlaufenden Spalt 14'.

Dringt nun zum Beispiel Wasser, z.B. auch dort an den Flächen des Gehäuses 2 und der Außenwand 7 gebildetes Tauwasser, zwischen Gehäuse 2 und Außenwand 7 des Motorhalters 6 in den Innenraum 10 ein, so sammelt sich dieses im Speicherraum 10, der einen ersten Speicher bildet. Ein Abfließen bzw. Eindringen in den Lagerbereich 11 wird durch die erste Ringwand 12 verhindert. Steigt ein Pegel im Speicherraum 10' so weit, dass der Rand der ersten Ringwand 12 überschritten wird, so fließt der überfließende Inhalt des Speicherraums 10' in den Sekundärspeicher 14 zunächst in den Spalt 14', wo er von der zweiten Ringwand 13 am Eindringen in den Lagerbereich 11 gehindert wird. Aufgrund des geringen Abstands der ersten Ringwand 12 zum Lagerbügel 17 ergibt sich eine Art Labyrinthdichtung für eindringendes Wasser und auch Fremdkörper wie Staub und Schmutz. Somit bildet die erste Ringwand 12 eine äußere Wasserschutzwand und die zweite Ringwand 13 eine weitere Wasserschutzwand. Der Motorhalter 6 mit seinen beiden Ringwänden 12 und 13 kann sowohl für die ersten Ausführung als auch für die zweite Ausführung der elektrischen Maschine 1 zur Anwendung kommen.

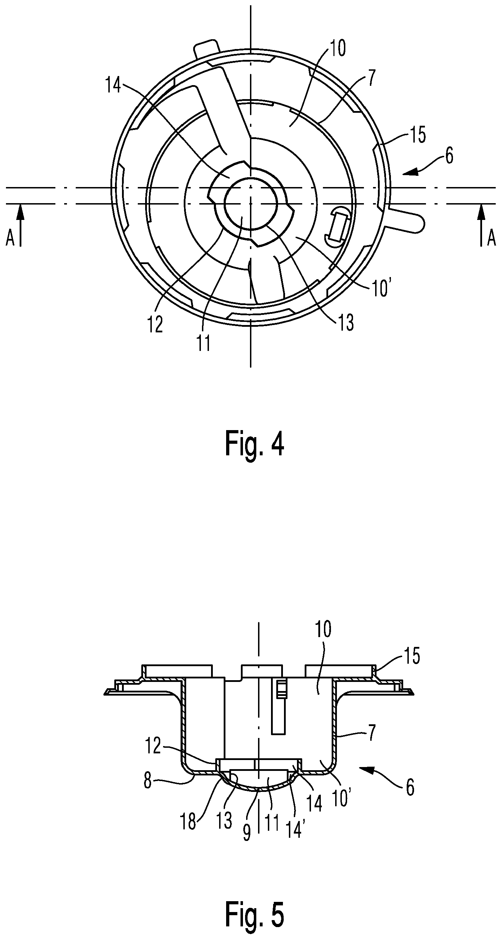

Fig. 4 zeigt eine Innenansicht eines ersten Ausführungsbeispiels des erfindungsgemäßen Motorhalters 6 mit den Ringwänden 12 und 13, und Fig. 5 stellt eine Schnittansicht gemäß Schnittlinie A-A nach Fig. 4 dar. In diesem Beispiel ist ein Kragen 15 exzentrisch zur Außenwand 7 des Motorhalters 6 angebracht. Die Form der zweiten Ringwand 13 ist so ausgebildet, dass die projizierte Fläche des Lagerbereichs 11 kreisförmig ist, während die Form der ersten Ringwand 12 so gestaltet ist, dass die Projektionsfläche des Sekundärspeicherraums 14 aus je zwei gegenüberliegenden Bogenabschnitten mit unterschiedlichen Radien und dem Kreis der zweiten Ringwand 13 begrenzt ist.

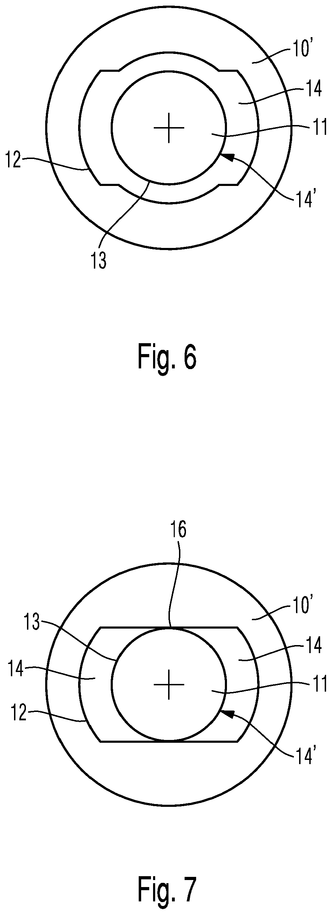

Diese Form der Ringwand 13 zeigt Fig. 6 in einer vergrößerten Darstellung. Die unterschiedlichen Bogenabschnitte der ersten Ringwand 12 sind untereinander durch gerade Abschnitte verbunden.

Im Unterschied dazu zeigt Fig. 7 eine vergrößerte Teilinnenansicht eines unteren Abschnitts eines zweiten Ausführungsbeispiels des erfindungsgemäßen Motorhalters 6 mit einer kreisförmig umlaufenden zweiten Ringwand 13. Die erste Ringwand 12 bildet mit zwei gegenüberliegenden Bogenabschnitten und zwei diese verbindenden geraden Abschnitte mit der zweiten kreisförmigen Ringwand einen Sekundärspeicher 14, der aus zwei Kreisringabschnitten besteht. Dieser Sekundärspeicher 14 weist eine geringere Füllmenge auf als derjenige des ersten Ausführungsbeispiels nach Fig. 6.

Die vorliegende Erfindung sei nicht auf die vorstehenden konkreten oder abstrakten Ausführungsbeispiele beschränkt, sondern lässt sich im Rahmen des durch die Ansprüche definierten Schutzbereiches modifizieren, ohne vom Gegenstand der vorliegenden Erfindung abzuweichen. So können zum Beispiel mehr als zwei Ringwände angeordnet werden.

## Patentansprüche

1. Motorhalter (6) zur Aufnahme einer elektrischen Maschine (1), insbesondere zur Aufnahme des Lagers einer elektrischen Maschine (1),
mit einer umlaufenden Außenwand (7),
mit einem mit der umlaufenden Außenwand verbundenen Zwischenboden (8),
mit einem Boden (9) zur Aufnahme eines Lagers, welcher in dem Zwischenboden (8) eingeformt ist und mit dem Zwischenboden (8) durch einen Übergangsbereich (18) verbunden ist, **dadurch gekennzeichnet, dass** der Übergangsbereich (18) eine umlaufende erste Ringwand (12) und zumindest eine umlaufende zweite Ringwand (13) aufweist, die einen im Übergangsbereich vorgesehenen, kreisringförmigen Speicherraum (14) bilden,
wobei die erste und die zumindest eine zweite Ringwand (12, 13) mit einem Lagerbügel (17) einer dem Motorhalter (6) zuzuordnenden elektrischen Maschine (1) eine Labyrinth-artige Dichtung ausbilden.

2. Motorhalter nach Anspruch 1,
**dadurch gekennzeichnet,**
**dass** die erste und zumindest eine zweite Ringwand (12, 13) jeweils eine gleiche Höhe aufweisen.

3. Motorhalter nach einem der vorhergehenden Ansprüche,
**dadurch gekennzeichnet,**
**dass** die zumindest eine erste Ringwand (12) und ein ihr zugeordneter Abschnitt der Außenwand (7) einen weiteren Speicherraum festlegen.

4. Motorhalter nach einem der vorhergehenden Ansprüche,
**dadurch gekennzeichnet,**
**dass** der Übergangsbereich (18) im Übergang zu dem Zwischenboden (8) mit zumindest einer umlaufenden ersten Ringwand (12) und im Übergang zu dem Boden (9) mit zumindest einer umlaufenden zweiten Ringwand (13) begrenzt ist.

5. Motorhalter nach einem der vorhergehenden Ansprüche,
**dadurch gekennzeichnet,**
**dass** die zumindest eine zweite Ringwand (13) mit dem Boden (9) einen für das Lager (4) der elektrischen Maschine vorgesehenen Lagerbereich (11) festlegt.

6. Elektrische Maschine (1),
mit einem Gehäuse (2), welches ein Ende mit einem Lagerbügel (17), der ein nach außen zumindest teilweise offenes Lager (4) aufweist, enthält,
mit einem Motorhalter (6) nach zumindest einem der Ansprüche 1 bis 5, wobei der Motorhalter (6) über dem Ende des Gehäuses (2) mit dem Lagerbügel (17) angeordnet ist, und wobei das Lager (4) im Lagerbereich (11) des Motorhalters (6) angeordnet ist.

7. Elektrische Maschine nach Anspruch 6,
**dadurch gekennzeichnet,**
**dass** sich die erste und die zumindest eine zweite Ringwand (12, 13) im Wesentlichen in Richtung der Längsachse der elektrischen Maschine (1) erstrecken.

8. Elektrische Maschine nach einem der Ansprüche 6 oder 7,
**dadurch gekennzeichnet,**
**dass** die erste und die zumindest eine zweite Ringwand (12, 13) mit dem Lagerbügel (17) eine Labyrinth-artige Dichtung ausbilden.

9. Elektrische Maschine nach einem der Ansprüche 6 bis 8,
**dadurch gekennzeichnet,**
**dass** die elektrische Maschine (1) Bestandteil einer Klimaanlage eines Kraftfahrzeugs ist.

## Claims

1. Engine bracket (6) for receiving an electrical machine (1), in particular for receiving the bearing of an electrical machine (1),
comprising a peripheral outer wall (7),
comprising an intermediate floor (8) connected to the peripheral outer wall,
comprising a floor (9), which is formed integrally in the intermediate floor (8) and connected to the intermediate floor (8) by way of a transition region (18), for receiving a bearing,
**characterised in that**
the transition region (18) has a peripheral first annular wall (12) and at least one peripheral second annular wall (13) which form a circular, annular storage space (14) provided in the transition region,
the first and the at least one second annular wall (12, 13) forming a labyrinth-type seal together with a bearing support (17) of an electrical machine (1) to be assigned to the engine bracket (6).

2. Engine bracket according to claim 1,
**characterised in that**
the first and at least one second annular wall (12, 13) are each of an identical height.

3. Engine bracket according to any of the preceding claims, **characterised in that**
the at least one first annular wall (12) and a portion assigned thereto of the outer wall (7) establish a further storage space.

4. Engine bracket according to any of the preceding claims,
**characterised in that**
the transition region (18) is delimited by at least one peripheral first annular wall (12) in the transition to the intermediate floor (8) and by at least one peripheral second annular wall (13) in the transition to the floor (9).

5. Engine bracket according to any of the preceding claims,
**characterised in that**
the at least one second annular wall (13) establishes a bearing region (11), provided for the bearing (4) of the electrical machine, together with the floor (9).

6. Electrical machine (1),
comprising a housing (2) which contains an end comprising a bearing support (17) which has a bearing (4) which is outwardly open at least in part,
comprising an engine bracket (6) according to at least one of claims 1 to 5, wherein the engine bracket (6) is arranged above the end of the housing (2) comprising the bearing support (17), and wherein the bearing (4) is arranged in the bearing region (11) of the engine bracket (6).

7. Electrical machine according to claim 6,
**characterised in that**
the first and the at least one second annular wall (12, 13) extend substantially in the direction of the longitudinal axis of the electrical machine (1).

8. Electrical machine according to either claim 6 or claim 7,
**characterised in that**
the first and the at least one second annular wall (12, 13) form a labyrinth-type seal together with the bearing support (17).

9. Electrical machine according to any of claims 6 to 8,
**characterised in that**
the electrical machine (1) is part of an air-conditioning system of a motor vehicle.

## Revendications

1. Support de moteur (6) destiné à loger une machine électrique (1), notamment destiné à loger le palier d'une machine électrique (1),
comportant une paroi extérieure (7) périphérique, comportant un fond intermédiaire (8) relié à la paroi extérieure périphérique,
comportant un fond (9) destiné à loger un palier, lequel est formé dans le fond intermédiaire (8) et est relié au fond intermédiaire (8) par une zone de transition (18), **caractérisé en ce que**
la zone de transition (18) présente une première paroi annulaire (12) périphérique et au moins une deuxième paroi annulaire (13) périphérique, lesquelles forment un espace de stockage (14) en forme d'anneau circulaire ménagé dans la zone de transition,
dans lequel la première et l'au moins une deuxième parois annulaires (12, 13) forment, avec un étrier de support (17) d'une machine électrique (1) à associer au support de moteur (6), une bague d'étanchéité en forme de labyrinthe.

2. Support de moteur selon la revendication 1,
**caractérisé en ce que** la première et au moins une deuxième parois annulaires (12, 13) présentent respectivement une hauteur identique.

3. Support de moteur selon l'une quelconque des revendications précédentes,
**caractérisé en ce**
**que** l'au moins une première paroi annulaire (12) et une section de la paroi extérieure (7), qui lui est associée, définissent un espace de stockage supplémentaire.

4. Support de moteur selon l'une quelconque des revendications précédentes,
**caractérisé en ce**
**que** la zone de transition (18) au passage vers le fond intermédiaire (8) est délimitée par au moins une première paroi annulaire (12) périphérique et au passage vers le fond (9) par au moins une deuxième paroi annulaire (13) périphérique.

5. Support de moteur selon l'une quelconque des revendications précédentes,
**caractérisé en ce**
**que** l'au moins une deuxième paroi annulaire (13) définit avec le fond (9) une zone de stockage (11) ménagée pour le palier (4) de la machine électrique.

6. Machine électrique (1),
comportant un carter (2) qui comprend une extrémité munie d'un étrier de support (17), lequel présente un palier (4) au moins partiellement ouvert vers l'extérieur, comportant un support de moteur (6) selon au moins une des revendications 1 à 5, dans laquelle le support de moteur (6) est disposé avec l'étrier de support (17) au dessus de l'extrémité du carter (2), et dans laquelle le palier (4) est disposé dans la zone de stockage (11) du support de moteur (6).

7. Machine électrique selon la revendication 6,
**caractérisée en ce**
**que** la première et l'au moins une deuxième parois annulaires (12, 13) s'étendent essentiellement en direction de l'axe longitudinal de la machine électrique (1).

8. Machine électrique selon l'une quelconque des revendications 6 ou 7,
**caractérisée en ce**
**que** la première et l'au moins une deuxième parois annulaires (12, 13) forment avec l'étrier de support (17) une bague d'étanchéité en forme de labyrinthe.

9. Machine électrique selon l'une quelconque des revendications 6 à 8,
**caractérisée en ce**
**que** la machine électrique (1) fait partie intégrante d'une installation de climatisation d'un véhicule automobile.
